# NOUVEAU FASCICULE DE BREVET EUROPEEN

(11) **EP 0 659 474 B2**
(45) Date de publication et mention de la décision concernant l'opposition: **13.10.1999**
(45) Mention de la délivrance du brevet: 04.06.1997
(21) Numéro de dépôt: 94402897.6
(22) Date de dépôt: 15.12.1994
(51) Int. Cl.: B01J 8/22, B01J 8/26, B01J 10/00, B01D 53/84, B01D 53/74, B01D 53/88, C12M 1/40

(54) **Procédé de mise en contact d'un courant gazeux et d'une phase liquide, dispositifs pour sa mise en oeuvre et applications**
Verfahren zum Zusammenführen eines Gasstroms mit einer Flüssigphase, Vorrichtungen zur Durchführung des Verfahrens, und Anwendungen
Process for contacting a gaseous stream with a liquid phase, apparatuses for effecting the process and applications

(30) Priorité: 22.12.1993 FR 9315500
(43) Date de publication de la demande: 28.06.1995
(73) Titulaire: Gignier, Jean, F-75015 Paris (FR)
(72) Inventeur: Gignier, Jean, F-75015 Paris (FR)
(74) Mandataire: Phélip, Bruno

(56) Documents cités:
- EP-A- 0 328 758
- EP-A- 0 543 579
- DE-A- 2 634 173
- FR-A- 594 488
- PATENT ABSTRACTS OF JAPAN vol. 12, no. 143 (C-492) 30 Avril 1988 & JP-A-62 258 727 (CHIYODA CHEM. ENG. & CONSTR. CO.) 11 Novembre 1987 & DATABASE WPI Section Ch, Week 8751, Derwent Publications Ltd., London, GB; Class E31, AN 87-357851 & JP-A-62 258 727 (CHIYODA CHEM. ENG. CO.) 11 Novembre 1987
- J.Chem. Eng.Japan, vol. 15, no. 5,1982,pages 391-393
- Chem.Reactors; design/engineering/operation, Ed.Technip (1988) pages 252-254 et 445-447
- VDI Lehrgang Mehrphasenströmungen, du 15 au 20.10.73, Düsseldorf
- "Bubble Column Reactors", W.Deckwer, Ed.Wiley and sons New York (1992), pages 6-9 et 16-17
- "Verfahrenstechnische Berechnungsmethoden", Partie 5 Reacteurs chimiques, Ed. VCH Verlag (1987), pages 245-246

## Description

La présente invention concerne le domaine de la mise en contact d'un courant gazeux et d'une phase liquide. Elle a plus particulièrement pour objet un procédé et des dispositifs améliores de mise en contact entre d'une part un gaz et d'autre part une phase liquide, laquelle peut être soit un liquide homogène, soit un liquide contenant des particules solides en suspension, en vue de réaliser la fixation dans la phase liquide de certains constituants du gaz.

L'invention a encore pour objet les applications desdits procédé et dispositifs. Un premier exemple d'application est l'épuration des gaz, l'invention étant particulièrement intéressante pour fixer des constituants se trouvant à faibles concentrations dans le gaz, l'élimination poussée de tels constituants étant actuellement très difficile et partielle.

Un autre exemple d'application consiste à réaliser des réactions chimiques ou physico-chimiques au sein de la phase liquide, c'est-à-dire avec le liquide lui-même ou avec un solide en suspension dans le liquide. Dans ce cas, l'invention procure des réacteurs chimiques ou biochimiques particulièrement efficaces. Des exemples plus détaillés de tels réacteurs seront donnés plus loin.

Divers dispositifs de contact gaz/liquide sont bien connus des hommes du métier.

Les uns sont les plateaux de divers types connus: à calottes, à clapets ou perforés, qui sont utilisés pour des opérations de distillation, d'absorption ou d'épuisement (stripping). Ces opérations sont purement physiques et visent a faire passer préférentiellement un composant d'une phase dans l'autre en jouant sur les différences de pression partielle des divers composants. Pour cela, il n'y a pas besoin de volumes de liquide importants sur le plateau et les épaisseurs de liquide sont généralement inférieures à 100 mm. Des épaisseurs plus importantes seraient d'ailleurs gênantes surtout pour les plateaux de type perforé ou à clapets, où le liquide est maintenu sur le plateau par la seule pression du gaz passant à travers les perforations ou les clapets, et où on veut éviter un "pleurage" qui court-circuiterait l'écoulement méthodique du liquide sur le plateau. De plus, sur de tels plateaux, la présence de solides perturbe sérieusement la performance de l'opération.

D'autres dispositifs de contact gaz/liquide sont constitués par des récipients ou des colonnes avec barbotage du gaz à la partie inférieure. Pour améliorer le contact, on utilise des agitateurs mécaniques, ou bien on assure un mouvement du liquide par air-lift grâce à des séparations entre une zone aérée et une zone de retour non aérée. Un autre mode d'agitation est celui décrit dans la demande de brevet français 91.05.830 publiée sous le N° 2676375 où c'est la géométrie même du récipient qui assure la circulation. Dans tous ces appareillages, le rapport hauteur/diamétre du dispositif est en pratique d'au moins 1 et il est le plus souvent supérieur et même parfois très largement supérieur (jusqu'à 100). Par ailleurs, ces appareillages n'assurent pas par eux-mêmes, comme le font les plateaux, une circulation méthodique du liquide depuis une entrée jusqu'à une évacuation. Enfin, la perte de charge sur l'air, et donc la puissance de compression nécessaire, sont importantes, ce qui représente un coût significatif.

A titre de documents illustrant l'état de la technique dans le domaine de la mise en contact d'un gaz et d'un liquide, on peut aussi se référer par exemple aux documents ci-après.

Le très ancien brevet français FR-A-594.488 décrit d'une manière très générale un procédé pour l'absorption et l'épuration de gaz, ainsi que des dispositifs pour sa mise en oeuvre. Selon ce document, le gaz est amené en contact d'un liquide et d'une matière solide, l'utilisation de cette dernière étant indispensable. Pour cette raison, les dispositifs comportent toujours des moyens distincts pour assurer la diffusion du gaz et pour supporter la matière solide. Par ailleurs, ce document ne contient aucun enseignement concret sur les paramètres qui doivent nécessairement être choisis pour assurer une épuration poussée du gaz ou la réalisation de certaines réactions chimiques ou biochimiques. dans lesquelles le solide en suspension dans la phase liquide exerce une action catalytique ou participe à une réaction chimique ou biochimique. Enfin, le document FR-A-594.488 ne contient aucun enseignement pour réaliser une mise en contact intime d'un gaz et d'un liquide, sans la présence d'une matière solide.

Le brevet EP-A-0543579 concerne un procédé et un dispositif ayant spécifiquement pour objet l'élimination de résidus pesticides dans l'eau. En d'autres termes, ce document concerne un procédé pour la purification de l'eau. Le procédé consiste à utiliser du charbon actif en particules, qui est maintenu en suspension dans l'eau à traiter. L'un des moyens pour assurer la mise en suspension du charbon actif dans le liquide consiste à prévoir un courant de gaz d'aération qui est introduit à la partie inférieure de la zone contenant l'eau à traiter. Dans un tel procédé, le courant gazeux ne joue pas d'autre rôle que de maintenir en suspension le charbon actif, le document ne contenant aucun enseignement concernant le traitement de constituants qui seraient contenus dans le gaz. La description du brevet EP-A-0543579 fait clairement apparaître que le solide en suspension dans la phase liquide, à savoir le charbon actif dans l'eau, constitue le moyen essentiel et indispensable du procédé. Aucune indication ne peut être tirée de ce document pour un procédé d'épuration de gaz dans lequel on met en contact le gaz à traiter avec une phase liquide ne contenant aucun solide en suspension.

Le brevet JP-A-62.258.727 décrit un procédé et un dispositif dont l'objet spécifique est le traitement d'effluents gazeux en vue de les désulfurer et d'éliminer la poussière. Le procédé consiste à faire barboter le gaz a traiter, qui contient notamment SO₂ comme impureté, en même temps qu'un gaz, tel que l'air, contenant de l'oxygène, dans un milieu liquide de composition spécifique en prenant des dispositions pour maintenir dans le liquide une teneur maximale en sulfite. La phase liquide contient des composés de calcium qui sont susceptibles de réagir avec l'anhydride sulfureux. Les moyens de mise en contact du gaz et du liquide sont traditionnels et impliquent un simple barbotage des gaz dans le liquide. La zone de réaction ne comprend aucune plaque perforée séparant le liquide et la partie où est introduit le gaz à traiter. Il est clair que l'enseignement du brevet JP-A-62.258.727 est limité à un procédé dans lequel le gaz à épurer barbote directement dans le liquide, avec un gaz, tel que l'air, contenant de l'oxygène.

L'article de MIYAHARA et al., J. Chem. Eng. Japan Vol. 15 N°5, 1982, pages 391-393, décrit un dispositif de laboratoire sous forme d'une colonne de bullage comprenant un plateau perforé au-dessus duquel un liquide (eau ou éthanol) est maintenu par un débit de gaz (air), en vue d'étudier le volume de gaz présent dans le liquide en régime permanent (gas holdup) en fonction de divers paramètres dimensionnels de la colonne. Cet article ne se préoccupe pas du transfert dans la phase liquide des constituants du gaz, par exemple de composés volatils, tels que des solvants contenus dans des effluents gazeux industriels, qui sont susceptibles d'être fixés dans ladite phase, et ne définit pas les données qui, en combinaison, doivent être mises en oeuvre dans un procédé permettant de réaliser un tel transfert de matière de la phase gazeuse à la phase liquide.

La présente invention a pour but de remédier aux inconvénients, brièvement rappelés ci-dessus, de la téchnique antérieure.

Elle permet d'assurer un contact gaz/liquide dans des conditions qui ne sont réalisées par aucun des systèmes existants. Elle procure des performances qui se sont révélées surprenantes tant sur le plan des géométries possibles que sur celui de l'efficacité du transfert de matière, de la phase gaz à la phase liquide.

Un autre objet de l'invention est de fournir un procédé de fixation de constituants gazeux contenus dans un courant gazeux, par mise en contact de celui-ci avec une phase liquide homogène ou hétérogène, ce procédé étant par exemple applicable à la fixation de solvants nocifs ou gênants contenus dans les effluents gazeux industriels.

Un autre objet encore de l'invention est la réalisation de réactions chimiques et biochimiques, par exemple des réactions chimiques de catalyse homogène ou hétérogène.

Sous sa forme générale, l'invention concerne un procédé selon la revendication 1.

Comme indiqué précédemment, l'expression "phase liquide" au sens de la présente description désigne aussi bien un milieu liquide homogène qu'un milieu liquide hétérogène contenant des particules solides en suspension.

Dans un mode de réalisation simple et avantageux, la phase liquide de fixation est un milieu aqueux.

L'invention n'est pas limitée à un mode de fixation des constituants du courant gazeux et de la phase liquide. Cette fixation peut être en effet physique, chimique ou physico-chimique. Il peut s'agir d'une absorption, d'une adsorption, d'une dissolution ou d'une réaction chimique à proprement parler.

Le procédé de l'invention met en oeuvre une zone de fixation dont le fond horizontal est percé de trous pour le passage du gaz, avec une hauteur de liquide supérieure à 200 mm et pouvant atteindre un mètre, mais de préférence comprise entre 300 et 400 mm. Cette hauteur de liquide est largement supérieure à ce qui est utilisé dans les plateaux perforés décrits dans la littérature, dont les méthodes de calcul préconisent de ne pas dépasser 100 mm comme limite supérieure extrême et recommandent de préférence des hauteurs de 50 à 100 mm (LUDWIG 2ème éd. Gulf Publishing Corp.). D'autre part, selon l'invention, la surface totale des perforations est comprise entre 1/40 et 1/300 de la surface totale disponible pour les perforations, alors que pour les plateaux perforés connus, ce même rapport se trouve dans la gamme de 1/6 à 1/14.

Par ailleurs, l'invention se distingue aussi nettement des capacités agitées par les agitateurs mécaniques ou par "air lift" dans la mesure où le rapport hauteur de liquide/diamètre de la zone de fixation est largement inférieur à 1 pour des appareils industriels: par exemple 0,1 pour un appareil de diamètre de 3 m avec une hauteur de liquide de 300 mm.

Selon une autre caractéristique avantageuse de l'invention, les perforations ont des surfaces individuelles comprises dans la fourchette de 0,5 à 3,5 mm². La forme de ces perforations est indifférente, le plus pratique étant d'utiliser des perforations circulaires. Ces dimensions de perforations se distinguent nettement de ce qui est couramment utilisé dans les plateaux perforés où des diamètres de 3 mm ou 1/8" (surface de 7 mm²) sont considérées comme un minimum (Chem. Eng. Progress, Juillet 1993 - p. 71-77), les dimensions les plus généralement recommandées se situant dans la gamme de 5-10 mm soit une surface de 19 à 78 mm² et atteignant même 127 mm².

Selon l'invention, les débits de gaz exprimés en termes de vitesse rapportée à la section totale de la zone de fixation, peuvent varier entre 0,185 m/sec et 1 m/sec. Ces chiffres correspondent à de l'air à pression atmosphérique et doivent donc être ajustés pour d'autres gaz ou d'autres pressions suivant les corrélations connues (en première approximation, proportionnalité à l'inverse de la racine carrée de la densité du gaz).

On a constaté, d'une manière surprenante, que dans de telles conditions, malgré la forte charge de liquide sur les perforations, aucun "pleurage" n'était observé et que ce résultat favorable était conservé avec des particules solides plus denses que l'eau et dont la dimension pouvait être inférieure au diamètre des perforations. Avec de tels solides, on réalise une phase liquide/solide relativement homogène et agitée par le passage du gaz. La densité moyenne d'une telle suspension peut être importante: par exemple, le volume total de solides mesuré avant introduction dans la zone de fixation peut être aussi élevé que 75% du volume de la zone (50 à 70% étant la fourchette préférée). Ceci est très avantageux quand le solide joue un rôle dans la réaction où l'on désire impliquer le ou les composé(s) absorbé(s) dans le liquide à partir du flux gazeux: catalyseur minéral ou biologique (support d'enzymes immobilisées ou de microorganismes).

Les hauteurs de liquide peuvent être importantes, par exemple de l'ordre du mètre comme indiqué ci-dessus, mais, en fonction des autres caractéristiques de l'invention, il est plus intéressant de fractionner cette hauteur et de se limiter à des hauteurs comprises entre 200 et 600 mm, et de préférence entre 300 et 400 mm.

En effet, si la zone de fixation définie ci-dessus peut être occupée par un liquide non renouvelé, il est aussi possible et généralement avantageux de faire circuler ce liquide entre une zone d'entrée définie par exemple par un distributeur et une zone de sortie opposée, définie par un déversoir. On peut ainsi renouveler le liquide tout en laissant le solide en place, ce qui est avantageux pour un système de catalyse hétérogène. Cette circulation du liquide permet d'effectuer commodément des opérations annexes telles que chauffage ou refroidissement, introduction de réactifs, de catalyseurs solubles tels qu'une enzyme, ou encore retrait de produits de réaction ou de sous-produits, surtout dans les processus d'épuration biologique dans les milieux industriels.

Cette possibilité de circulation du liquide rend avantageux l'échelonnement des étages de contact pour améliorer l'épuisement des composants à fixer. On est donc conduit à limiter la hauteur de liquide dans chacun des étages pour se trouver dans les plages de 300 à 400 mm précitées qui se sont révélées suffisantes pour une bonne fixation des composants solubilisables.

Ainsi, selon l'invention, on utilise avantageusement une pluralité de zones de fixation, le courant gazeux à traiter traversant successivement lesdites zones.

En ce qui concerne cette fixation dans le liquide de composés volatils, apportés par le flux gazeux, les références relatives aux matériels connus (plateaux des types usuels utilisés pour des opérations d'absorption) montrent que la pente de la courbe d'équilibre liquide-gaz est un paramètre ayant une influence déterminante sur le rendement d'absorption, c'est-à-dire le rapport entre le changement effectif de concentration dans le gaz et celui qui serait réalisé si le gaz sortant était en équilibre avec le liquide quittant le plateau. Par exemple, Walker et Sherwood (Ind, Eng. Chem. 33, p. 93 (1941)) indiquent que pour l'absorption dans l'eau d'un composé volatil pour lequel la pente de la courbe d'équilibre est de 0,20 (cas de l'éthanol à 15°C), le rendement d'absorption est de 90%, tandis que ce rendement tombe à 6% pour une pente de courbe d'équilibre de 200 (cas du toluène à 15°C). Autrement dit, le rendement d'absorption est divisé par 15.

Les essais de fixation de composés ayant des affinités très diverses pour le liquide utilisé ont donné le résultat surprenant que, grâce à l'invention, pour tous ces composés, le niveau de fixation était sensiblement égal au maximum théorique, c'est-à-dire que la concentration de chaque composant étudié dans le gaz sortant correspondait très sensiblement à l'équilibre physique avec la concentration de ce même composant dans le liquide,

Il en résulte que si on met en oeuvre, au sein du liquide ou au contact des particules solides (action catalytique ou biochimique de ces dernières), des réactions consommant le (ou les) composant(s) fixé(s) à partir du gaz, la fixation de ces composants augmente et la teneur dans le gaz sortant de l'étage de contact considéré sera encore en équilibre avec cette concentration réduite dans le liquide.

L'invention convient donc très bien au cas où le but recherché est l'épuisement des composants initialement présents dans le gaz. L'utilisation de plusieurs étages en série est alors particulièrement efficace.

Les types de réactions qui peuvent être mis en oeuvre sont multiples:
- réactions chimiques de catalyse homogène, les réactifs pouvant être renouvelés, et les produits de réaction éliminés sur la boucle de circulation,
- réactions chimiques de catalyse hétérogène,
- réactions biochimiques en phase liquide: enzymes solubles ou microorganismes répartis uniformément dans le liquide,
- réactions biochimiques en phase hétérogène avec enzymes ou microorganismes immobilisés sur un support..

L'invention trouve notamment son utilité pour l'épuration des gaz industriels, pour l'élimination de solvants gazeux contenus dans les atmosphères d'ateliers de fabrication, pour la purification des mélanges gazeux, pour l'élimination des solvants chlorés dans les atmosphères de blanchisseries ou de teintureries industrielles, pour l'épuration des atmosphères de garages chargées de produits pétroliers et, d'une manière générale, des atmosphères recyclées dans les circuits de conditionnement d'air dans les grands immeubles de bureaux.

On peut ainsi éliminer les solvants ou les substances gazeuses présentes dans l'atmosphère qui peuvent être nocives pour l'homme ou perturbatrices pour les processus de fabrication.

Selon l'invention, la phase liquide de fixation peut comprendre un catalyseur soluble, par exemple une enzyme soluble dans l'eau ou en suspension, par exemple des microorganismes dispersés dans une phase aqueuse à l'état de cellules libres.

Selon l'invention, les particules solides déposées sur la plaque perforée, lorsqu'elles sont présentes, peuvent être des zéolites, de l'alumine, des pouzzolanes poreux et, de manière générale, des particules insolubles dans l'eau, présentant une bonne résistance mécanique et susceptibles d'absorber un catalyseur chimique ou biochimique.

Un type de catalyseur absorbé sur les particules insolubles est constitué par des catalyseurs métalliques d'oxydation, des enzymes oxydantes, des enzymes peroxydantes, des protéases, des lipases, des carboxypeptidases et/ou des estérases. Ce peut être aussi des microorganismes colonisant les particules solides et apportant ou produisant de telles enzymes.

Sous un autre aspect, le procédé selon l'invention peut être mis en oeuvre dans un dispositif ci-dessus décrit, ledit dispositif comprenant au moins un récipient destiné à contenir le liquide, une plaque horizontale percée de perforations, s'étendant à l'intérieur du récipient et séparant celui-ci en une partie supérieure et une partie inférieure, le liquide étant maintenu dans la partie supérieure au-dessus de ladite plaque, une tubulure pour amener le gaz à traiter dans la partie inférieure, le gaz circulant ainsi de bas en haut pour passer à travers les perforations de la plaque et venir en contact avec le liquide et des moyens pour évacuer le gaz traité à la partie supérieure.

Selon un mode de réalisation complémentaire de l'invention, le dispositif peut comporter des moyens pour amener du liquide additionnel dans la partie supérieure du récipient et des moyens pour évacuer une partie du liquide de la partie supérieure du récipient.

Pour un fonctionnement continu ou semi-continu, le dispositif comporte des moyens de récupération du gaz sortant du récipient pour le recycler à la partie inférieure sous la plaque perforée le liquide additionnel étant introduit de manière intermittente ou continue.

Selon un mode de réalisation intéressant au plan pratique, le dispositif comporte une pluralité de récipients, pour constituer un système à étages, le gaz provenant de l'étage ou récipient inférieur passant successivement à travers les étages supérieurs avant d'être évacué du dernier étage, des moyens étant prévus pour assurer la circulation de liquide additionnel et de liquide évacué au niveau de chaque étage.

Conformément à l'invention, le nombre de plaques ou plateaux perforés n'est pas limité. Selon les difficultés et selon les besoins de la fixation, le dispositif peut comporter deux plateaux perforés ou davantage.

De cette façon, le courant gazeux traverse une première plaque perforée sur laquelle est maintenue la phase liquide homogène ou hétérogène, le gaz déjà épuré traverse ensuite un deuxième plateau perforé supportant une phase liquide, identique ou différente, à celle circulant à travers la première plaque et, ainsi de suite aux différents étages jusqu'à ce que la phase gazeuse soit totalement débarrassée des substances gazeuses qu'il convient d'éliminer.

On observera que, pour répondre aux besoins de l'invention, en particulier dans son application à un dispositif pour des réactions biochimiques, dans lesquelles la suspension solide joue le rôle de biocatalyseur, la circulation de liquide dans un système à étages a essentiellement pour objet d'homogénéiser les concentrations au sein de chaque étage et aussi de réguler la température.

Egalement, dans un système multi-étages, la circulation de liquide peut se faire individuellement au niveau de chaque étage, une partie du liquide étant alors recyclée pour servir de liquide additionnel ou bien, en variante, on peut prévoir des communications de liquide entre chaque étage, de façon à réaliser un système en cascade. De telles réalisations sont à la portée de l'homme du métier et n'ont pas besoin d'être décrites plus en détail.

L'invention sera encore illustrée sans être aucunement limitée par les exemples qui suivent ainsi qu'en référence aux dessins annexés sur lesquels:
Figure 1 représente de façon schématique en coupe verticale un premier mode de réalisation de dispositif selon l'invention.
Figure 2 est un schéma analogue à la Figure 1, d'un autre mode de réalisation de dispositif à étages avec circulation de liquide en cascade.
Figure 3 représente encore une autre variante de réalisation de dispositif multi-étages avec circulation de liquide à chaque étage.

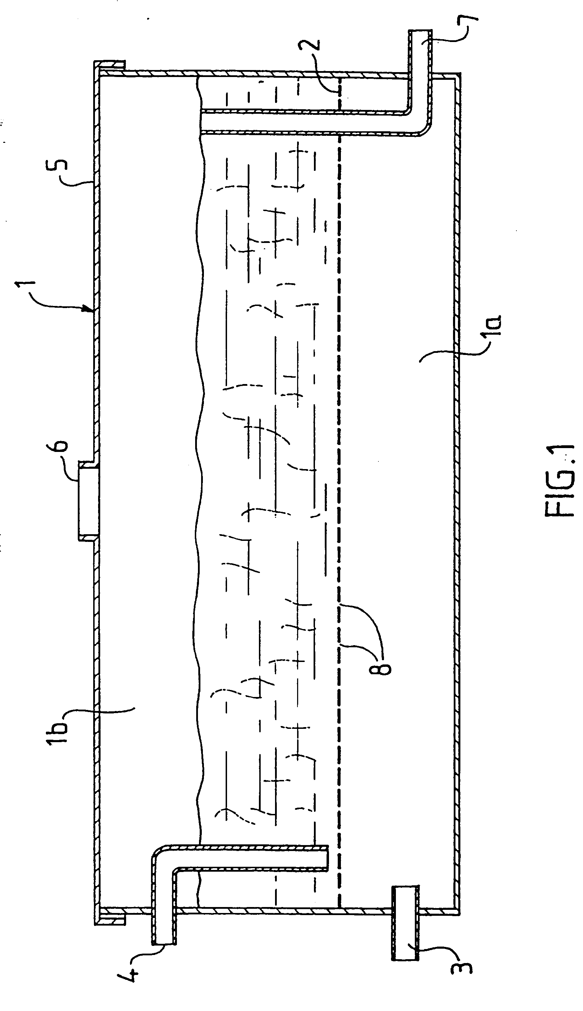

Dans un mode de réalisation de dispositif selon l'invention représenté à la Figure 1, celui-ci a la forme d'un récipient parallélépipédique 1 à section quadratique. Il est notamment réalisé en matériau transparent tel que le polyméthacrylate de méthyle, par exemple celui connu sous la dénomination "Altuglas", le polycarbonate ou le verre. Il présente deux parties 1a, 1b séparées par un plateau métallique perforé 2. Le gaz à épurer arrive à la partie inférieure la du récipient par une buse d'admission 3. Il traverse ensuite la plaque perforée 2 comportant un grand nombre d'orifices 8 dont le diamètre est de 2 mm environ.

Il est bien entendu que le dispositif peut être réalisé en d'autres matériaux ou présenter d'autres formes géométriques.

Sur la plaque perforée 2 est disposé un lit de particules solides formées de zéolites ou d'aluminosilicate.

La dimension des particules est choisie de telle sorte que celles-ci puissent être mobiles.

Le liquide d'épuration arrive à la partie supérieure 1b latéralement par l'embouchure 4. En outre, sur la partie supérieure 1b du récipient, on dispose un couvercle d'étanchéité 5 portant un orifice central 6 laissant sortir le gaz épuré et permettant d'ajuster la pression du gaz. Le couvercle peut porter des dispositifs de régulation ou de prises d'échantillon (pression, température....).

A la base du dispositif, un ajutage latéral 7 permet d'évacuer le liquide chargé.

On a avantage à ce que les particules en suspension ne soient pas agitées d'un mouvement violent. De cette façon, le contact entre les particules solides, faisant par exemple fonction de catalyseurs et les substances à fixer dans le gaz est optimal.

Dans le mode de réalisation illustré à la Figure 1, la circulation des fluides est effectuée d'une manière continue jusqu'à ce que la totalité du gaz à traiter soit passée. Pour les opérations d'entretien, on peut être amené à ralentir ou même à arrêter le flux gazeux; le liquide chargé des substances à fixer peut alors s'écouler complètement par un ajutage latéral inférieur non représenté sur les dessins.

Le récipient 1 est avantageusement formé de deux capacités qui s'emboîtent très exactement. Après la réaction d'épuration, à l'arrêt du passage des fluides, on peut désemboîter les deux capacités et récupérer les particules solides chargées de catalyseur.

Selon le cas, la substance solide en suspension peut être réactivée ou retraitée de façon à ce qu'elle puisse servir à nouveau dans un nouveau processus d'épuration.

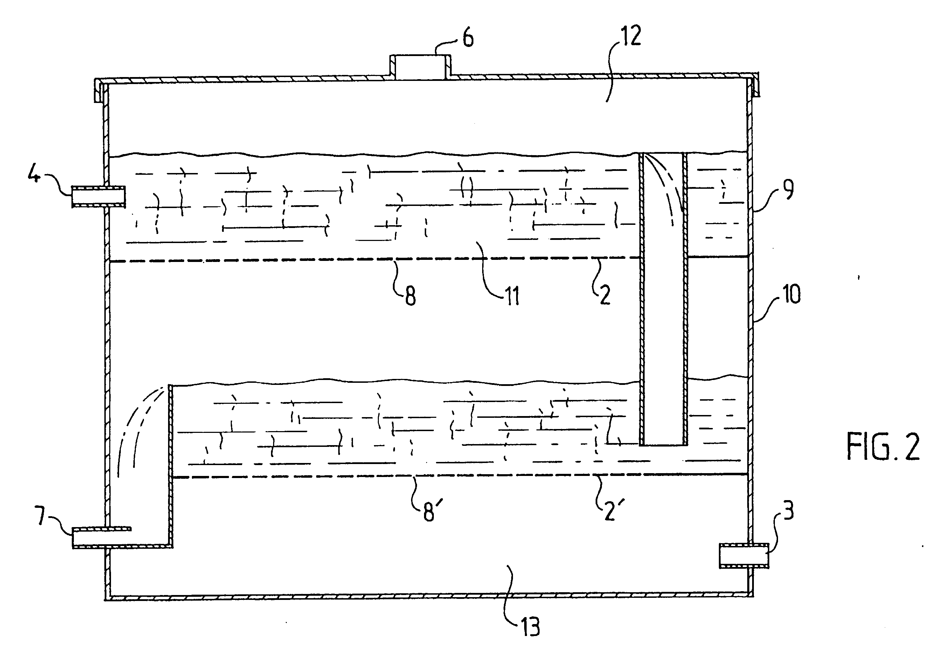

Dans un autre mode d'exécution préféré, représenté à la Figure 2, le dispositif comprend deux étages de fixation 9 et 10 comportant une entrée 4 de liquide 11 dans la capacité supérieure 12, et une entrée de gaz 3 à la partie inférieure de la capacité 13 de l'étage inférieur 10. Un ajutage 7 piqué dans la capacité 13 permet la sortie du liquide ayant servi à la fixation. Le dispositif comporte deux plaques perforées métalliques 2 et 2' comportant des orifices 8, 8', de telle sorte que le courant gazeux admis traverse d'abord la première plaque perforée 2' sur laquelle repose une suspension de particules d'absorption dans le liquide de fixation puis la seconde plaque perforée 2 elle-même surmontée d'une couche de liquide de fixation admis par l'ajutage d'entrée 4.

Ces deux étages d'épuration permettent une fixation optimale des constituants gazeux contenus dans la phase gazeuse et dont l'élimination est souhaitée.

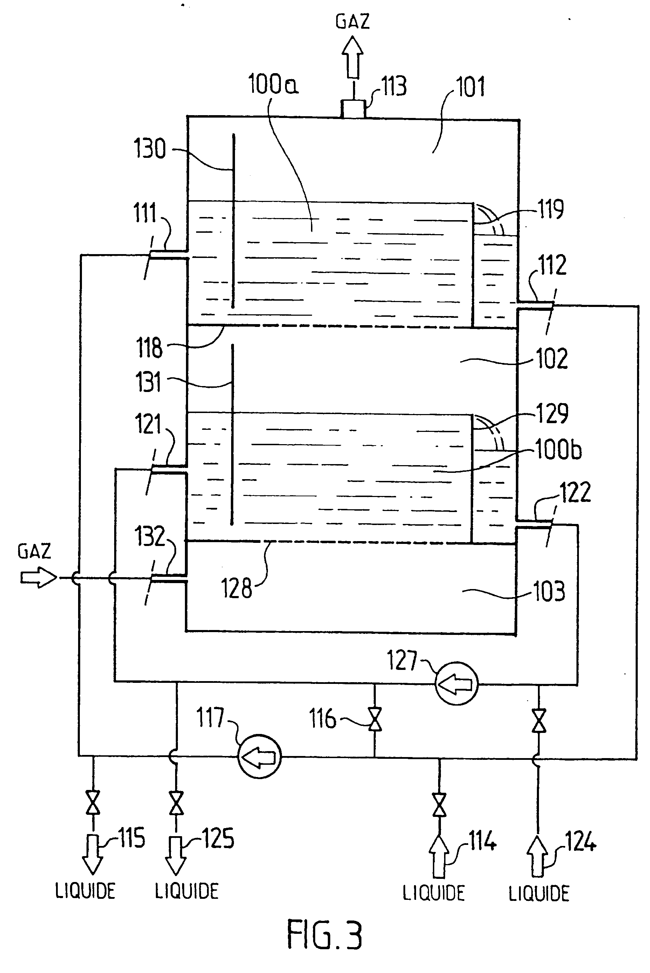

Un autre mode de réalisation de système multiétagé est représenté à la Figure 3. Le dispositif comprend deux zones de fixation 100a et 100b et trois capacités superposées 101, 102 et 103. Les capacités 101 et 102 sont limitées à leur partie inférieure par une plaque perforée 118 et 128, respectivement réalisée suivant les caractéristiques décrites plus haut. Le liquide, contenant ou non des solides en suspension, est retenu au-dessus de ces plaques, sans fuite de liquide ni de granules solides vers la capacité inférieure, par l'écoulement gazeux qui se fait de bas en haut. Les hauteurs de liquide dans chacune des capacités sont dans les fourchettes indiquées ci-dessus. Elles sont déterminées par les déversoirs 119 et 129. Une circulation en boucle sur chacune des capacités est assurée par les pompes 117 et 127. Les liquides sont repris à partir des compartiments de sortie limités par les déversoirs, via les tubulures 112 et 122, et recyclés via les tubulures d'entrée 111 et 121. En face de ces dernières, un déflecteur 130, 131 assure une répartition uniforme du liquide sur toute la largeur de la capacité.

Dans la capacité inférieure 103 est introduit par la tubulure 132 le gaz à traiter.

Les débits de circulation de liquide sont tels que le temps de rétention par passage est de l'ordre de quelques minutes. On peut effectuer des additions de liquide 114 et/ou 124 sur chacune des circulations 112, 122, des purges 115 et/'ou 125, ainsi qu'une communication 116 entre les boucles de circulation. Ces débits secondaires sont minimes par rapport aux débits de circulation principaux lorsque les deux capacités fonctionnent de manière essentiellement indépendante l'une de l'autre en ce qui concerne les liquides. Néanmoins, en réglant convenablement l'entrée 114, l'intercommunication 116 et la sortie 125, on peut réaliser un fonctionnement en cascade comme avec le dispositif de la Figure 2.

Le gaz est admis par la tubulure 132, traverse les plaques perforées 128 puis 118 ainsi que les liquides retenus sur chacune de ces plaques, et sort finalement par la tubulure 113.

La présente description qui concerne un système à deux étages peut évidemment être étendue à un nombre quelconque d'étages superposés.

La réalisation serait analogue à celle représentée à la Figure 3, avec n + 1 capacités pour la réalisation de n étages d'absorption-réaction.

Un tel système multiétagé est utile si l'on veut réduire beaucoup la teneur d'un composé volatil contenu dans le gaz entrant. Si par exemple ce composé est éliminé par une réaction enzymatique ou microbiologique réalisée au sein du liquide (enzymes solubles ou cellules libres) ou dans la maille des granules en suspension (enzymes ou cellules immobilisées), l'équilibre entre les vitesses d'absorption et de métabolisation des composés volatils à traiter détermine leur concentration dans le liquide, qui détermine à son tour la concentration dans le gaz sortant (on a vu que dans le système selon l'invention le gaz et le liquide sont pratiquement en équilibre pour ce qui est des composants absorbables présents dans le gaz). On est donc conduit à des concentrations de plus en plus faibles d'étage en étage grâce aux réactions effectuées sur chaque étage, et on a ainsi la possibilité d'une élimination poussée du ou des composants volatils absorbables.

Les hauteurs importantes de liquide selon l'invention permettent la réalisation de volumes réactionnels bien adaptés au traitement des débits gazeux cités comme caractéristiques de l'invention.

### EXEMPLE I

Le dispositif utilisé est du type général représenté à la Figure 1 et comporte deux compartiments. Le compartiment supérieur 1b peut recevoir le liquide avec une capacité utile de 6 litres. Le fond du compartiment supérieur est une plaque horizontale de surface égale à 200 cm². La surface disponible pour les perforations est de 120 cm² et la surface totale de ces dernières en représente 0,5%. Un déversoir de sortie 7 assure une hauteur de liquide de 300 mm. Une circulation de liquide (eau) est assurée depuis un déversoir d'entrée 4 jusqu'à ce déversoir de sortie. Un débit d'air est introduit dans le compartiment inférieur sous la plaque perforée, par la tubulure 3.

Le débit d'air est réglé au voisinage de 8m³/h et le débit d'eau à 100 l/h. En vue des essais, on injecte des composés organiques dans le flux d'air, au moyen d'une pompe doseuse. L'expérimentation a porté sur les composés suivants: éthanol, acétone, acétate d'éthyle, acétate de n-propyle, acétate d'iso-amyle, toluène.

Les débits utilisés ont été compris entre 0,5 et 3 ml/mn.

On mesure par CPG les teneurs dans le gaz et dans le liquide à l'entrée et à la sortie, de façon à assurer un bouclage du bilan matières.

Les résultats de ces mesures sont consignés au tableau I ci-dessous:

**TABLEAU I**

| Produits et débit d'injection* | Quantité dans le gaz en sortie exprimée en ml/mn de produit liquide | |
|---|---|---|
| | Mesurée ** | Par calcul d'équilibre *** |
| Ethanol | Trace | 0,018 |
| Acétone | 0,097 | 0,092 |
| Acétate d'éthyle 3 ml/mn | 0,467 | 0,485 |
| Acétate d'éthyle | 0,195 | 0,198 |
| Acétate de n-propyle | 0,253 | 0,226 |
| Acétate d'isoamyle 0,5 ml/mn | 0,153 | 0,143 |
| Toluène | 0,895 | 0,882 |

| | | |
|---|---|---|
| * En l'absence d'autre indication, ce débit est de 1 ml/mn | | |
| ** Moyennes de 3 a 5 séries de mesures | | |
| *** Le calcul tient compte des débits d'air et d'eau effectifs au moment de la mesure | | |

### EXEMPLE II

Dans le même appareillage qu'à l'Exemple I, on a ajouté, dans le compartiment supérieur, 3,6 l de granules de silicoaluminate ayant les caractéristiques suivantes:
. granulométrie: 1,5-3 mm (donc inférieure au diamètre des perforations)
. densité apparente: 0,85
. densité individuelle des granules: 1,65
. forme des granules: irrégulière.

On laisse ces granules se déposer régulièrement sur la plaque perforée, en les faisant tomber dans l'eau traversée par un petit débit d'air.

On reproduit les expériences de fixation de composés organiques dans les mêmes conditions de débit air et eau que précédemment. Les produits utilisés sont l'acétate d'éthyle, l'acétate de n-propyle, l'acétate d'iso-amyle et le toluène. Les teneurs en sortie sont mesurées quand elles ont atteint la stabilité, pour éliminer l'influence d'une adsorption éventuelle sur le solide.

Les résultats obtenus sont rassemblés dans le tableau II suivant:

**TABLEAU II**

| Produits et débit d'injection | Quantité en sortie exprimée en ml/mn de produit liquide |
|---|---|
| Acétate d'éthyle 3 ml/mn | 0,443 |
| Acétate de n-propyle 1 ml/mn | 0,220 |
| Acétate d'iso-amyle 0,5 ml/mn | 0,157 |
| Toluène 1 ml/mn | 0,887 |

Les résultats sont similaires à ceux obtenus à l'Exemple I, c'est-à-dire sans granules en suspension.

### EXEMPLE III

Dans ces essais, on a étudié pour un même débit d'injection de produit organique, l'influence de la concentration de ce produit dans le liquide sur la teneur en sortie.

Les expériences ont porté sur l'acétate d'isoamyle et sur le toluène avec 2 concentrations pour le premier et 3 concentrations pour le deuxième.

Le tableau III rassemble les résultats obtenus.

**TABLEAU III**

| | Ratio concentration dans gaz sortant (g/m³) sur concentration dans gaz entrant (g/m³) | Ratio concentration dans liquide (g/l) sur concentration dans gaz entrant (g/m³) |
|---|---|---|
| Acétate d'amyle | 0,570 | 0,0653 |
| | 0,180 | 0,0207 |
| Toluène | 0,962 | 0,00541 |
| | 0,820 | 0,00460 |
| | 0,730 | 0,00410 |

On observe la constance du rapport entre les deux colonnes, dans la proportion correspondant sensiblement à l'équilibre liquide/vapeur, théorique pour le produit étudié.

### EXEMPLE IV

On modifie l'appareillage décrit à l'Exemple I en remplaçant le déversoir de sortie de hauteur 300 mm par un déversoir de hauteur 100 mm, le reste étant inchangé. La hauteur du liquide en circulation se trouve ainsi ramenée à environ 100 mm: hauteur du déversoir, plus hauteur du liquide surversant soit quelques mm.

On reprend les expériences avec le même mode opératoire que celui décrit à l'exemple I, avec éthanol et toluène. Les résultats analytiques sont consignés au tableau IV ci-dessous:

**TABLEAU IV**

| Composé organique Débit d'injection | Quantité dans le gaz sortant, en ml/mn de liquide |
|---|---|
| Ethanol, 1 ml/mn | 0,061 |
| Toluène, 1 ml/mn | 0,959 |

On constate que pour l'éthanol, l'absorption est encore bonne, avec un rendement d'environ 96% par rapport à l'équilibre liquide-vapeur théorique (rendement très proche de 100% dans l'Exemple I).

Pour le toluène, par contre, le rendement d'absorption n'est plus que 35% de l'équilibre théorique, au lieu de 89% dans les conditions de l'Exemple I.

### EXEMPLE V

On modifie à nouveau l'appareillage précédent en remplaçant la plaque perforée qui retient le liquide par une autre plaque percée de trous circulaires de diamètre 5 mm sur pas triangulaire de 15 mm (c'est-à-dire que les perforations occupent 10,1% de la surface disponible). Le déversoir de sortie a toujours une hauteur de 100 mm.

On reprend les expériences avec l'éthanol et le toluène. Les débits d'air, d'eau et de composés organiques sont dans les mêmes ratios que dans l'Exemple I. Les résultats analytiques sont consignés au tableau V ci-dessous, en % du rendement théorique d'absorption (équilibre liquide-vapeur entre le liquide et le gaz sortant).

**TABLEAU V**

| Composé organique volatil | Absorption, % du rendement théorique |
|---|---|
| Ethanol | 89,3 |
| Toluène | 4,9 |

Le rendement d'absorption est encore acceptable pour l'éthanol, alors qu'il devient très faible pour le toluène.

### EXEMPLE VI

On utilise le dispositif décrit à l'Exemple I. On le stérilise avec de l'acide nitrique dilué, et on le rince avec de l'eau ayant traversé un filtre de stérilisation (filtre à 0,2 µ). On utilise alors cet appareillage comme fermenteur pour y effectuer une culture bactérienne à partir d'une souche appartenant au genre Pseudomonas en faisant circuler le liquide en boucle fermée avec insufflation d'air. Cette culture est effectuée en milieu nutritif minimum, l'apport carboné étant constitué par du sucrose avec de petites quantités d'acétate d'éthyle.

Après 48 heures de culture à 30°C, on injecte de l'acétate d'éthyle dans l'air alimenté au débit de 8 m³/h à raison de 1 ml/mn. On maintient une circulation de liquide avec un débit d'environ 100 l/h, comme dans l'Exemple I, pour assurer l'homogénéité des concentrations à l'intérieur de la capacité. Le liquide pompé est continuellement retourné à la capacité qui est ainsi traversée avec un temps de rétention de 3,6 mn, sans aucun soutirage ni purge. On se contente de faire périodiquement un ajout d'eau distillée stérile pour remplacer la perte par évaporation. Au bout de 6 heures, on effectue la mesure par CPG des teneurs en acétate d'éthyle dans l'air sortant et dans le liquide. Ces mesures sont renouvelées de quart d'heure en quart d'heure pendant 2 heures. La moyenne des mesures, dont l'écart maximum est inférieur à 5%, est comme suit:
. teneur dans le gaz en sortie, g/m³: 4,50
. teneur d'équilibre avec le liquide g/m³: 4,55.

On constate qu'il y a donc disparition d'environ 18 g/h d'acétate d'éthyle qui sont dégradés par la culture bactérienne dans une réaction aérobie.

Par ailleurs, les teneurs dans le gaz et le liquide sont ici encore très voisines de l'équilibre théorique liquide-vapeur.

Il apparaît donc que le liquide circulant sur le plateau et traversé par le gaz joue le double rôle de zone d'absorption comme dans l'Exemple I et de zone de réaction.

### EXEMPLE VII

On procède comme dans l'Exemple VI, sauf que la capacité a reçu 3 l de granules de pouzzolane de granulométrie 1,5-3 mm, également stérilisés, avant d'effectuer la culture bactérienne. Celle-ci est effectuée pendant 48 h à 30°C en faisant circuler le liquide en boucle fermée sur la capacité avec insufflation d'air. On utilise la même souche et le même milieu nutritif, que dans l'Exemple VI.

On procède ensuite à l'injection d'acétate d'éthyle dans l'air à raison de 1 ml/mn pendant 3 heures, puis de 3 ml/mn pendant à nouveau 3 heures, les débits d'air et de liquide étant les mêmes que dans l'Exemple VI.

On effectue alors des analyses par CPG de quart d'heure en quart d'heure pendant 2 heures. La moyenne des mesures est comme suit:
. teneur dans le gaz en sortie, g/m³: 11,25
. teneur d'équilibre avec le liquide, g/m³: 11,10.

On constate qu'il y a eu disparition d'acétate d'éthyle à l'allure de 70 g/h, soit environ quatre fois plus que dans les expériences précédentes. Les particules de pouzzolane, colonisées par les bactéries se comportent comme un biocatalyseur supérieur, probablement en raison d'une population bactérienne plus importante. Ces particules sont agitées par le courant gazeux, mais on évite qu'elles soient entraînées par la circulation de liquide grâce à un tamis à malle de 0,5 mm placé au-dessus du déversoir de sortie, en continuation de celui-ci dans le même plan vertical.

On obtient à nouveau la combinaison dans le même volume d'une zone d'absorption dont l'efficacité intrinsèque n'est pas modifiée, et d'une zone de réaction dont l'activité a été multipliée par 4.

Le temps de rétention à chaque passage du liquide est d'environ 2,5 minutes.

### EXEMPLE VIII

On répète les expériences de l'Exemple VII, mais dans le but d'obtenir une teneur plus faible dans l'air, on utilise un système multiétagé du type représenté à la Figure 3 avec deux zones de fixation disposées en série sur l'air, l'air sortant de la première alimentant la seconde, mais chacune d'elles ayant sa circulation propre de liquide.

Chaque zone contient 3 litres des mêmes granules de pouzzolane que ceux utilisés dans les expériences relatées dans l'Exemple VII. On ensemence simultanément les deux capacités et on procède de la même manière que précédemment avec la seule différence que toutes les opérations sont effectuées simultanément sur les deux capacités.

Avec une alimentation de 3 ml/mn d'acétate d'éthyle dans l'air entrant à la première capacité, on obtient les résultats analytiques suivants:
. teneur dans l'air sortant de la première capacité, et entrant dans la deuxième, g/m³: 10,82
. teneur dans l'air sortant de la deuxième capacité, g/m³: 2,5.

On constate que la deuxième capacité dégrade l'acétate d'éthyle à raison de 75 g/h et la deuxième capacité de 66 g/h. Ainsi, avec une teneur initiale dans l'air de 20 g/m³, on obtient une teneur réduite à 2,5 g/m³ en sortie de la deuxième capacité.

## Revendications

1. Procédé de mise en contact d'un courant gazeux et d'une phase liquide, certains constituants au moins dudit courant gazeux étant susceptibles d'être fixés par ladite phase liquide, ledit procédé consistant à faire passer le gaz dans au moins une zone contenant ladite phase liquide, en vue de réaliser la fixation dans la phase liquide desdits constituants, la partie inférieure de ladite zone comprenant une plaque perforée, le courant gazeux étant amené à traverser ladite plaque de bas en haut, procédé dans lequel on maintient la hauteur de liquide dans ladite zone entre 200 et 600 mm, et de préférence entre 300 et 400 mm, la surface totale des perforations de ladite plaque est comprise entre 1/40 et 1/300 de la section horizontale disponible pour les perforations, la surface individuelle des perforations de la plaque perforée est comprise entre 0,5 et 3,5 mm2, et le courant gazeux contenant les constituants à fixer est admis à un débit correspondant à une vitesse comprise entre 0,185 m/sec et 1 m/sec, ces chiffres étant relatifs à de l'air à pression atmosphérique et pouvant varier selon la nature du gaz et la pression de celui-ci.

2. Procédé selon la revendication 1, caractérisé en ce que la phase liquide de fixation est un milieu aqueux.

3. Procédé selon l'une des revendications 1 ou 2, caractérisé en ce que la phase liquide de fixation est un milieu liquide homogène.

4. Procédé selon l'une des revendications 1 ou 2, caractérisé en ce que la phase liquide de fixation est un milieu liquide hétérogène contenant en suspension des particules solides.

5. Procédé selon l'une des revendications 1 à 4, caractérisé en ce que la phase liquide comprend un catalyseur soluble ou en suspension.

6. Procédé selon la revendication 5, caractérisé en ce que le catalyseur est un catalyseur métallique.

7. Procédé selon la revendication 5, caractérisé en ce que le catalyser est une enzyme choisie parmi les enzymes oxydantes, les enzymes peroxydantes, les protéases, les lipases, les carboxypeptidases et/ou les estérases.

8. Procédé selon la revendication 5, caractérisé en ce que le catalyseur comprend une culture de microorganismes.

9. Procédé selon l'une des revendications 7 ou 8, caractérisé en ce que les enzymes ou les microorganismes sont fixés sur des particules solides en suspension.

10. Procédé selon l'une quelconque des revendications 1 à 9, caractérisé en ce que la charge en particules solides dans la zone de fixation va jusqu'à 75% du volume de ladite zone, ce chiffre étant calculé par rapport à leur volume à sec avant chargement.

11. Procédé selon la revendication 10, caractérisé en ce que la charge en particules solides dans la zone de fixation se situe dans la gamme de 50 à 70% du volume de ladite zone, leur volume étant déterminé à sec avant chargement.

12. Procédé selon l'une quelconque des revendications 1 à 11, caractérisé en ce qu'on fait circuler le liquide de la zone de fixation entre une zone d'entrée et une zone de sortie.

13. Procédé selon l'une quelconque des revendications 1 à 12, caractérisé en ce qu'on utilise une pluralité de zones de fixation, le courant gazeux à traiter traversant successivement lesdites zones.

14. Application du procédé selon l'une quelconque des revendications 1 à 13 à l'épuration d'effluents gazeux industriels ou des circuits de conditionnement d'air.

15. Application du procédé selon l'une quelconque des revendications 1 à 13 à la réalisation de réactions chimiques ou biochimiques.

## Claims

1. A process for contacting a gas stream with a liquid phase, certain components at least of said gas stream being susceptible of being fixed by said liquid phase, said process consisting in passing the gas through at least one zone containing said liquid phase in order to implement fixing said components in the liquid phase, the lower part of said zone comprising a perforated plate, said gas stream being led to flow through said plate upward, process in which the liquid height in said zone is kept between 200 mm and 600 mm, 300 mm to 400 mm being preferred, the total surface of holes perforated through said plate is under 1/40 and over 1/300 of the total horizontal surface area of the plate which is available for being perforated, the individual surface area of the holes in the perforated plate is in the range 0.5 mm² to 3.5 mm², and the gas stream containing the components to be fixed is introduced with a flowrate corresponding to a velocity in the range 0.185 m/sec to 1 m/sec, these figures corresponding to air under atmospheric pressure and being capable to vary according to the nature of the gas and its pressure.

2. A process according to claim 1, characterized in that the fixing liquid phase is an aqueous medium.

3. A process according to one of claims 1 or 2, characterized in that the fixing liquid phase is a homogeneous liquid medium.

4. A process according to one of claims 1 or 2, characterized in that the fixing liquid phase is a heterogeneous liquid medium containing solid particles in suspension.

5. A process according to one of claims 1 to 4, characterized in that the liquid phase comprises a catalyst, soluble or in suspension.

6. A process according to claim 5, characterized in that the catalyst is a metal catalyst.

7. A process according to claim 5, characterized in that the catalyst is an enzyme chosen among oxiding enzymes, peroxidizing enzymes, proteases, lipases, carboxypeptidases and/or esterases.

8. A process according to claim 5, characterized in that the catalyst comprises a culture of microorganisms.

9. A process according to one of claims 7 or 8, characterized in that the enzymes or the microorganisms are immobilized on solid particles in suspension.

10. A process according to anyone of claims 1 to 9, characterized in that the volume of the solid particle charge in the fixing zone is up to 75% of the volume of said zone, this figure being related to the dry volume of particles before loading.

11. A process according to claim 10, characterized in that the volume of the solid particle charge in the fixing zone is within the range 50 to 70% of the volume of said zone, said volume of particles being their dry volume before loading.

12. A process according to anyone of claims 1 to 11, characterized in that the liquid of the fixing zone is circulated from an inlet zone to an outlet zone.

13. A process according to anyone of claims 1 to 12, characterized in that a number of fixing zones is used, the gas stream to be treated flowing through said zones in succession.

14. The application of the process according to anyone of claims 1 to 13 for purification of industrial gaseous effluents or of air conditioning loops.

15. Application of the process according to anyone of claims 1 to 13 for performing chemical or biochemical reactions,

## Patentansprüche

1. Verfahren zum In-Kontakt-Bringen eines Gasstroms mit einer flüssigen Phase, wobei Wenigstens bestimmte Bestandteile des Gasstromes durch die flüssige Phase fixiert werden können, wobei das Verfahren darin besteht, daß man das Gas in wenigstens eine Zone einleitet, die die flüssige Phase enthält, um die Fixierung der Bestandteile in der flüssigen Phase zu bewirken, wobei der untere Teil der Zone eine perforierte Platte umfaßt, wobei der Gasstrom dazu gebracht wird, die Platte von unten nach oben zu durchströmen, wobei in diesem Verfahren die Höhe der Zone auf einem Wert zwischen 200 mm und 600 mm vorzugsweise zwischen 300 mm und 400 mm, gehalten wird, die Gesamtoberfläche der Perforationen der Platte zwischen 1/40 und 1/300 des für die Perforationen verfügbaren horizontalen Querschnitts liegt, die Oberfläche der einzelnen Perforationen der perforierten Platte zwischen 0,5 mm² und 3,5 mm² liegt und der Gasstrom, der die zu fixierenden Bestandteile enthält, auf einen Durchsatz gebracht wird, der einer Geschwindigkeit zwischen 0,185 m/s und 1 m/s entspricht, wobei sich diese Zahlen auf Luft von Atmosphärendruck beziehen und je nach der Natur des Gases und dessen Druck variieren können.

2. Verfahren gemäß Anspruch 1, dadurch gekennzeichnet, daß es sich bei der flüssigen Fixierungsphase um ein wäßriges Medium handelt.

3. Verfahren gemäß einem der Ansprüche 1 oder 2, dadurch gekennzeichnet, daß es sieh bei der flüssigen Fixierungsphase um ein homogenes flüssiges Medium handelt.

4. Verfahren gemäß einem der Ansprüche 1 oder 2, dadurch gekennzeichnet, daß es sich bei der flüssigen Fixierungsphase um ein heterogenes flüssiges Medium handelt, das suspendierte feste Teilchen enthält.

5. Verfahren gemäß einem der Ansprüche 1 bis 4, dadurch gekennzeichnet, daß die flüssige Phase einen löslichen oder suspendierten Katalysator umfaßt.

6. Verfahren gemäß Anspruch 5, dadurch gekennzeichnet, daß es sich bei dem Katalysator um einen Metallkatalysator handelt.

7. Verfahren gemäß Anspruch 5, dadurch gekennzeichnet, daß es sich bei dem Katalysator um ein Enzym handelt, das aus Oxidasen, Peroxidasen, Proteasen, Lipasen, Carboxypeptidasen und/oder Esterasen ausgewählt ist.

8. Verfahren gemäß Anspruch 5, dadurch gekennzeichnet, daß der Katalysator eine Kultur von Mikroorganismen umfaßt.

9. Verfahren gemäß einem der Ansprüche 7 oder 8, dadurch gekennzeichnet, daß die Enzyme oder die Mikroorganismen auf suspendierten festen Teilchen fixiert sind.

10. Verfahren gemäß einem der Ansprüche 1 bis 9, dadurch gekennzeichnet, daß die Beladung der Fixierungszone mit festen Teilchen bis zu 75% des Volumens dieser Zone beträgt, wobei diese Zahl auf ihr Trockenvolumen vor der Beladung bezogen berechnet ist.

11. Verfahren gemäß Anspruch 10, dadurch gekennzeichnet, daß die Beladung der Fixierungszone mit festen Teilchen im Bereich von 50 bis 70% des Volumens dieser Zone liegt, wobei ihr Volumen trocken vor der Beladung bestimmt wurde.

12. Verfahren gemäß einem der Ansprüche 1 bis 11, dadurch gekennzeichnet, dar man die Flüssigkeit der Fixierungszone zwischen einer Eintrittszone und einer Austrittszone zirkulieren läßt.

13. Verfahren gemäß einem der Ansprüche 1 bis 12, dadurch gekennzeichnet, daß eine Vielzahl von Fixierungszonen verwendet wird, wobei der zu behandelnde Gasstrom diese Zonen nacheinander durchströmt.

14. Verwendung des Verfahrens gemäß einem der Ansprüche 1 bis 13 zur Reinigung industrieller Abgase oder von Umläufen bei Klimaanlagen.

15. Verwendung des Verfahrens gemäß einem der Ansprüche 1 bis 13 zur Durchführung chemischer oder biochemischer Reaktionen.
